# EUROPÄISCHE PATENTANMELDUNG

(11) **EP 1 564 433 A2**
(43) Veröffentlichungstag der Anmeldung: **17.08.2005**
(21) Anmeldenummer: 05002824.0
(22) Anmeldetag: 10.02.2005
(51) Int. Cl.: F16F 1/373

(54) **Federelement**

(30) Priorität: 10.02.2004 DE 102004006628
(71) Anmelder: Hasenstab, Gabi, 63814 Mainaschaff (DE)
(72) Erfinder: Hasenstab, Werner, (DE)
(74) Vertreter: Rösler, Uwe, Dipl.-Phys.

(57) **Zusammenfassung**

Beschrieben wird ein Federelement (1) bestehend aus einem Federkörper (2), der wenigstens eine elastisch verformbare Federwirkfläche (3) aufweist, längs der wenigstens ein die Federwirkfläche (3) überragendes Stützelement (5) vorgesehen ist, das eine von der Federwirkfläche (3) abgewandte Auflageebene (UL) definiert und die Federwirkfläche (3) wenigstens abschnittsweise umgibt, sowie einen der Federwirkfläche (3) gegenüberliegenden, durch den Federkörper (2) getrennten Wirkbereich (6) aufweist, der gleichgroß oder kleiner dimensioniert ist wie die Federwirkfläche (3) und in einer senkrechten Projektion auf die Federwirkfläche (3), die Federwirkfläche (3) zumindest teilweise überdeckt.

## Beschreibung

### Technisches Gebiet

Die Erfindung bezieht sich auf ein Federelement, das bei einem verhältnismäßig kleinen Federweg sehr große Kräfte in der Lage ist aufzunehmen.

### Stand der Technik

Federelemente mit den vorstehenden Eigenschaften sind beispielsweise als handelsübliche Tellerfedern bekannt, die jeweils eine kegelförmig ausgebildete Ringschalenform aufweisen und zumeist über eine ringförmige Kante aufliegen. Die von Tellerfedern aufzunehmenden Federkräfte sind letztendlich durch die nur geringe Auflagefläche begrenzt. Überdies weisen Tellerfedern, insbesondere bei hohen Lastwechselzahlen, beträchtliche Ermüdungserscheinungen auf, durch die die Federkennlinie, d.h. das Kraft-Weg-Verhalten, ungünstig beeinflusst und irreversibel verändert wird.

So besteht der Wunsch nach einem einer Tellerfeder vergleichbar klein bauendem Federelement, das jedoch im Gegensatz zu Tellerfedern weitaus größere Zug- und Druckkräfte übertragen soll, verbunden mit der weiteren Forderung nach einer verbesserten Ermüdungsresistenz selbst bei hohen Lastwechselzahlen. So gilt es nach klein bauenden Federelementen zu suchen, die beispielsweise Anwendungen in der Schienentechnik Stand halten sollen und bspw. für den gefederten Einsatz von Schienenlagerungen geeignet sind. Auch Brückenstützpunkte oder Maschinenlager sollen mit entsprechend belastbaren Federelementen federnd abgestützt werden.

Eine gegenüber den vorstehend erwähnten Tellerfedern deutlich verbesserte Federvariante stellt die, in der DE 202 05 139 U1 beschriebene Plattenfeder dar, die in einer bevorzugten Ausführungsform in Art einer Ringscheibe ausgebildet ist, längs der in räumlich begrenzten Sektorbereichen, die Ringscheibenebene überhöhende Krümmungen eingearbeitet sind. Die zwischen den Überhöhungen angeordneten Kreisscheibenbereiche dienen als Auflageflächen und sind für eine möglichst flächige Kraftüberübertragung über eine entsprechende Unterlage eben ausgebildet. Abweichend von der geschilderten Ringsscheibenform sind ebenso n-eckige Plattenfedergeometrien denkbar. Nun liegt der Vorteil vorstehend beschriebener Plattenfedern darin, dass sie mit Mitteln der Stanz- und/oder Umformtechnik kostengünstig und in nahezu beliebigen Dimensionen herstellbar sind. Vor allem verfügt eine derartige Plattenfeder über Federeigenschaften mit hoher Linearität in Abhängigkeit des Federweges, d.h. die Federkraft verhält sich streng proportional zur Federauslenkung. Doch können bei sehr klein dimensionierten Plattenfedern aufgrund der gestanzten bzw. umgeformten lokal begrenzten Krümmungen äußerst geringe Krümmungsradien längs der Plattenfeder auftreten, die insbesondere bei hohen Lastwechselzahlen bevorzugte Materialermüdungserscheinungen zeigen und zu lokalen Bruchkanten entarten können.

### Darstellung der Erfindung

So liegt der Erfindung die Aufgabe zugrunde, ein Federelement anzugeben, das auch bei kleinen und kleinsten Dimensionierungsgrößen ein ermüdungsfreies Federformverhalten zeigt. Unabhängig von der Federskalierung soll das Federelement hohen Lastwechselzahlen standhalten und über ein lineares Kraft-Weg-Verhalten verfügen.

Die Lösung der der Erfindung zugrunde liegenden Aufgabe ist im Patentanspruch 1 angegeben. Das erfindungsgemäße Federelement vorteilhaft weiterbildende Merkmale sind Gegenstand der Unteransprüche sowie der weiteren Beschreibung unter Bezugnahme auf die Ausführungsbeispiele zu entnehmen.

Das erfindungsgemäße Federelement besteht aus einem Federkörper, der wenigstens eine elastisch verformbare Federwirkfläche aufweist, längs der wenigstens ein die Federwirkfläche überragendes Stützelement vorgesehen ist, das eine von der Federwirkfläche abgewandte Auflageebene definiert und die Federwirkfläche wenigstens abschnittsweise umgibt, sowie einen der Federwirkfläche gegenüberliegenden, durch den Federkörper getrennten Wirkbereich aufweist, der gleichgroß oder kleiner dimensioniert ist wie die Federwirkfläche und in einer senkrechten Projektion auf die Federwirkfläche, die Federwirkfläche zumindest teilweise überdeckt.

Je nach Einsatzzweck und gewünschter Federhärte ist das erfindungsgemäße Federelement in unterschiedlichen Ausführungsformen realisierbar, die unter Bezugnahme auf die folgenden Figuren näher erläutert werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Drauf- und Seitendarstellung eines in Art einer Scheibenfeder ausgebildeten Federelementes,
- Fig. 2a, b, c: Seiten- und Draufsichtdarstellungen eines Federkörpers, sowie
- Fig. 3a, b: Seiten- und Draufsichtdarstellung eines symmetrisch ausgebildeten Federkörpers.

### Wege zur Ausführung der Erfindung, gewerbliche Verwendbarkeit

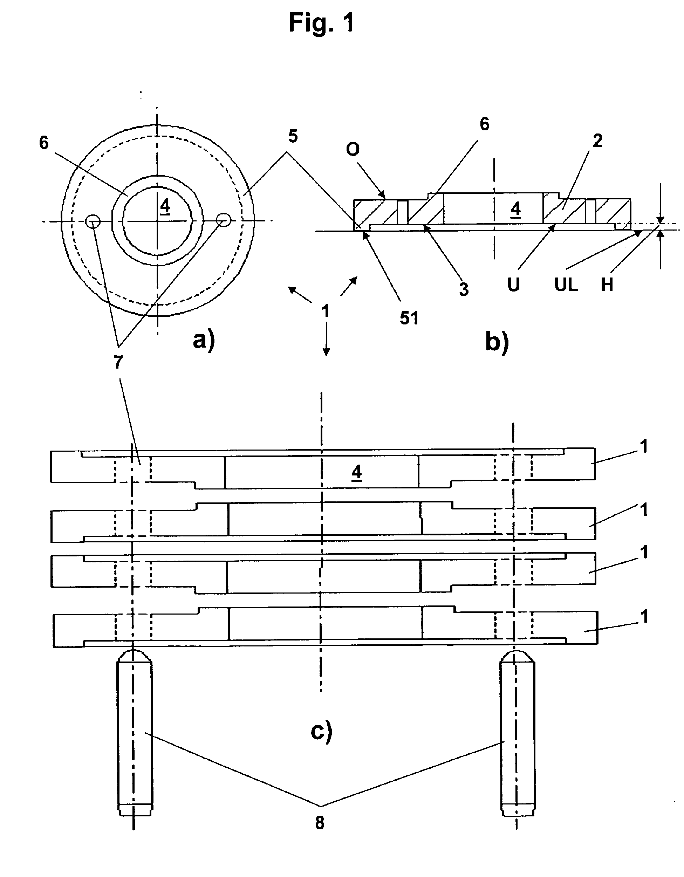

In einer einfachsten Ausführungsform ist das erfindungsgemäße Federelement 1 als Flachkörper 2 mit einer Oberseite O und einer Unterseite U ausgebildet. In Figur 1a ist eine Draufsicht und in Figur 1b ist eine Querschnittsdarstellung gezeigt. Figur 1c zeigt zwei Federelemente in stapelförmiger Anordnung. Im Weiteren sei Bezug auf alle drei Ansichten genommen.

Der Flachkörper 2 ist vorzugsweise aus einem metallischen Werkstoff gefertigt und weist im dargestellten Ausführungsbeispiel gemäß Fig. 1 eine Kreisscheibenform mit einer zentrischen Bohrung bzw. Öffnung 4 auf. Die jeweiligen Dimensionierungen hinsichtlich Kreisscheibendurchmesser, Bohrungsgröße oder Dicke des Flachkörpers sind beliebig skalierbar und an die jeweiligen Anforderungen anzupassen.

Selbstverständlich ist es möglich, den Flachkörper 2 auch abweichend von der dargestellten Kreisscheibenform, beispielsweise mit oval gekrümmtem Umfangsrand oder drei-, vier- oder mehreckiger Umfangskontur auszubilden.

Für die Federwirkung von besonderer Bedeutung ist das an der Unterseite U angebrachte Stützelement 5, das im Falle des Ausführungsbeispiels gemäß Figur 1 am peripheren Randbereich der Unterseite U vorgesehen ist und die Unterseite in Form einer stegartigen Überhöhung überragt. Das Stegelement 5 verfügt über eine einheitliche Steghöhe H und weist eine von der Unterseite U abgewandte Auflagefläche 51 auf. Da das Stegelement 5 die Unterseite U im gezeigten Ausführungsbeispiel vollständig umläuft, wird ein innerer Bereich der Unterseite U vom Stegelement 5 umschlossen, im Weiteren soll dieser Bereich als Federwirkbereich 3 bezeichnet werden.

Liegt das Federelement 1 mit der Auflagefläche 51 des Stegelementes 5 auf einer Unterlage UL auf, so ist die Federwirkfläche 3 über die Steghöhe H von der Unterlage UL beabstandet. Es ist leicht nachvollziehbar, dass bei einem Krafteintrag F bspw. senkrecht zur Oberseite O auf das Federelement 1 die frei tragende Federwirkfläche 3 konvex in Richtung des Krafteintrages elastisch verformt wird. Durch die elastische Verformung der Federwirkfläche 3 wird eine Federwirkung geschaffen, die sich durch ein lineares Federverhalten auszeichnet, d.h. die Federkennlinie verläuft streng linear.

Alternativ zur dargestellten Ausbildung des Stützelementes 5 in Form eines die Federwirkfläche 3 vollständig umschließenden Steges, ist es auch möglich, das Stützelement 5 mit Unterbrechungen längs des Umfangsrandes des Flachkörpers 1 auszubilden. In einer einfachsten Ausführungsform ist es ebenso denkbar, das Stützelement 5 bezogen auf den kreisrunden Umfangsrand des Federkörpers 1 lediglich als lokale Stützstellen auszubilden, die bezogen auf den Umfangsrand gleich verteilt angeordnet sind, so dass eine kippfreie Auflage des Federelementes 1 auf einer Unterlage UL gewährleistet ist. Wenigstens sollten zwei getrennt angeordnete Stützelemente 5 vorgesehen sein.

Grundsätzlich kann die Oberseite O des Federelementes 1 beliebig gestaltet sein, bspw. als ebene Fläche. Um den auf die Oberseite 2 des Federelementes 1 einwirkenden Krafteintrag jedoch gezielt vornehmen zu können, weist die Oberseite O des Federelementes1 eine gegenüber der Oberseite O erhabene Wirkfläche 6 auf, die im gezeigten Ausführungsbeispiel gemäß Fig. 1 als eine zentrisch um die mittige Durchgangsöffnung 4 angeordnete Ringfläche ausgebildet ist.

Das in Fig. 1 dargestellte Federelement kann als Einzelfederelement, aber insbesondere auch in einer stapelförmigen Vielfachanordnung (siehe Figur 1 c), eingesetzt werden. Hierzu sieht das scheibenförmig ausgebildete Federelement 1 neben dem zentrisch vorgesehenen Öffnungskanal 4, durch den bspw. ein Gewindebolzen oder ähnliches durchführbar ist, wenigstens zwei Zentrieröffnungen 7 vor, durch die zur gegenseitigen Ausrichtung der in einer Stapelanordnung vorgesehenen einzelnen Federelemente 1 jeweils ein Zentrierbolzen 8 einführbar ist.

Das scheibenförmig ausgebildete Federelement 1 lässt sich grundsätzlich je nach gewünschter Federhärte und dem jeweiligen Einsatzzweck beliebig skalierbar ausbilden. Neben der Größen- und Geometriewahl des Federelementes bestimmt auch die Materialwahl die mit dem Federelement verbundene Federwirkung. Wie bereits erwähnt, eignen sich insbesondere metallische Materialien, insbesondere geeignet gehärtete Stähle. Bei der Verwendung metallischer Federmaterialien erweist es sich als besonders geeignet, Federelemente nach der in Fig. 1 dargestellten Bauart im Wege eines Umformprozesses, beispielsweise im Rahmen eines Prägeverfahrens, herzustellen. Auch sind jedoch Spanabhebende Verfahren oder ähnliche Materialabtragende Verfahren für die Herstellung des Federelementes geeignet.

Neben der Verwendung metallischer Werkstoffe ist es jedoch durchaus denkbar, das erfindungsgemäß ausgebildete Federelement aus elastisch verformbaren Kunststoffen oder faserverstärkten Kunststoffen zu fertigen. In diesem Fall eignen sich zur Herstellung entsprechend geeignete Kunststoffspritzverfahren.

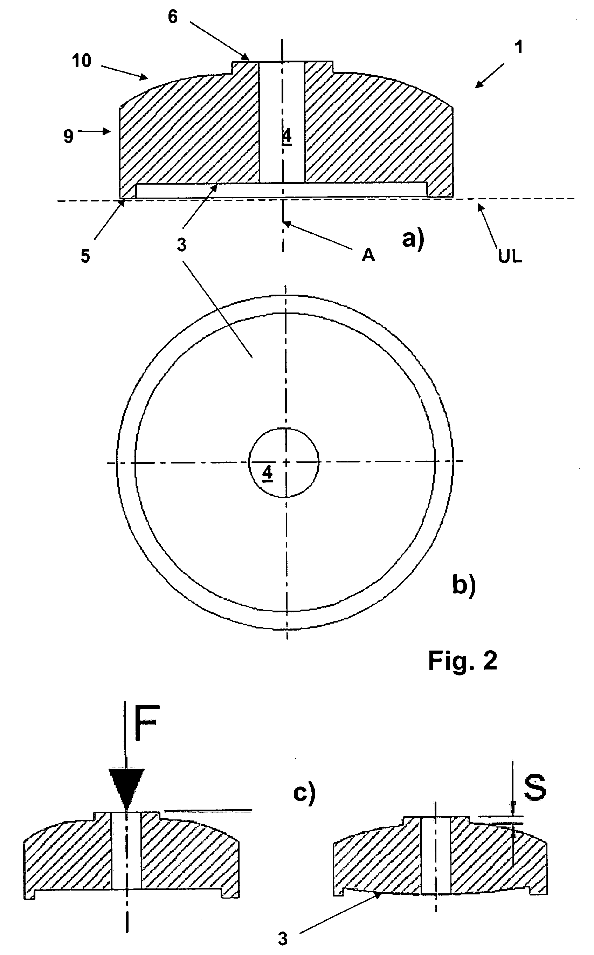

In den Figuren 2a and b ist ein alternatives Federelement 1 in Seiten- und Draufsichtdarstellung abgebildet. Das Federelement 1 weist, wie im vorigen Ausführungsbeispiel unter Bezugnahme auf Fig. 1, eine Federwirkfläche 3 auf, die von einem Stützelement 5 vollständig umgeben ist, so dass die Federwirkfläche 3 gegenüber einer Unterlage UL beabstandet angeordnet werden kann.

Das Federelement ist rotationssymmetrisch um die Rotationsachse A ausgebildet und verfügt gemäß Draufsichtdarstellung in Fig. 2b über eine kreisringförmig ausgebildete Federwirkfläche 3. Das Federelement 1 ist von einem zentrischen Öffnungskanal 4 durchsetzt, der jedoch nicht notwendigerweise, wie auch beim Ausführungsbeispiel in Figur 1, vorzusehen ist.

Der Federkörper des Federelementes 1 ist in zwei Körperabschnitte 9 und 10 unterteilbar, wobei beide Körperabschnitte 9 und 10 einstückig miteinander verbunden sind. Der Körperabschnitt 9 ist geradzylinderförmig ausgebildet und schließt radialwärts bündig mit dem radialen Umfangsrand des Stützelementes 5 an. Axialwärts an den Körperabschnitt 9 schließt ein sich axialwärts konisch bzw. parabolisch gekrümmt verjüngender Körperabschnitt 10 an, der an einen den Körperabschnitt 10 axialwärts überragenden Wirkbereich 6 angrenzt, der ebenfalls als Ringfläche ausgebildet und zentrisch längs der Rotationsachse A gegenüber der Federwirkfläche 3 angeordnet ist.

Das in Fig. 2a und b dargestellte Federelement 1 erweist sich insbesondere bei einer Krafteinwirkung F in axialer Richtung auf die Wirkfläche 6 als ein Federelement mit besonders großer Federhärte und einer höchst linear verlaufenden Federkennlinie. Gemäß Bilddarstellung in Fig. 2c führt eine axialwärts gerichtete Krafteinwirkung F zu einer konvexseitigen Verformung der Federwirkfläche 3, wobei die Wirkfläche 6 aus ihrer axialen Anfangsposition um den Federweg S axialwärts bewegt wird. Wird hingegen das Federelement 1 entlastet, so bildet sich die elastische Verformung der Federwirkfläche 3 vollständig zurück. Versuche haben gezeigt, dass ein gemäß Ausführungsbeispiel in Fig. 2 ausgebildetes Federelement mehrere 10⁶ Lastwechsel schadlos übersteht, ohne dabei eine qualitative sowie auch quantitative Einbuße im linearen Federkennlinienverhalten zu erleiden. Es ist daher davon auszugehen, dass das erfindungsgemäße Federelement weit mehr Lastwechsel unbeschadet überdauert.

Hierzu trägt insbesondere der sich axialwärts konisch oder parabolisch gekrümmt verjüngende Federkörperabschnitt 10 bei, der eine axialwärts auf die Wirkfläche 6 gerichtete Kraft F möglichst homogen auf die axial gegenüber liegende Federwirkfläche 3 zu verteilen vermag.

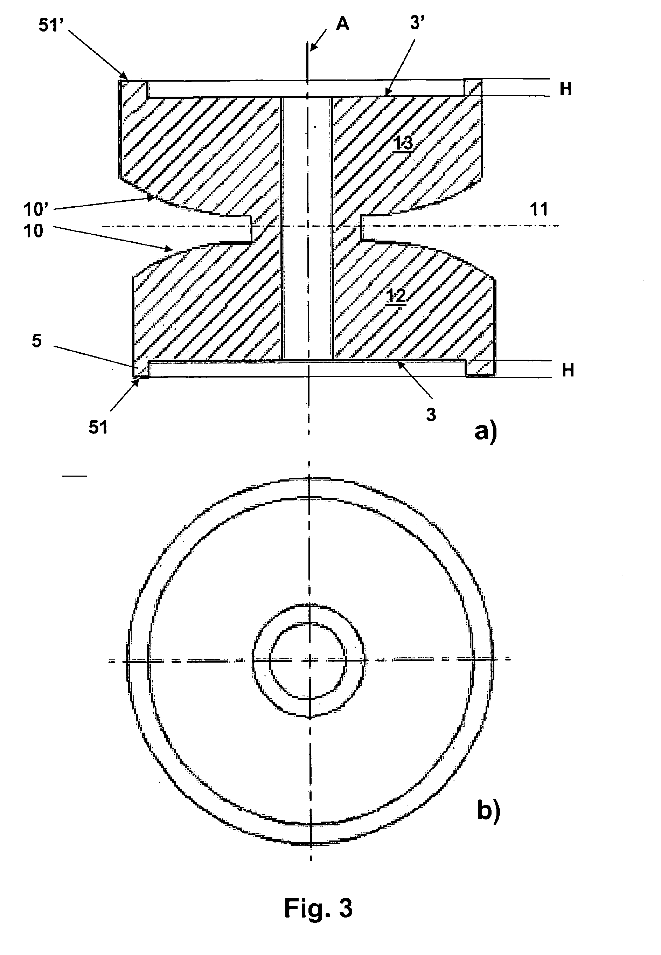

Um den Federweg des in Fig. 2 dargestellten Federelementes zu vergrößern, vorzugsweise zu verdoppeln, sieht das Ausführungsbeispiel gemäß Fig. 3 ein Federelement vor, das durch Spiegelung eines Federelementes nach Bauart in Figur 2 an der als Symmetrieebene 11 dienenden Wirkfläche 6 hervorgeht. Beide Hälften 12 und 13 des in Fig. 3 dargestellten Federelementes sind identisch ausgebildet und einstückig miteinander verbunden. Durch die doppelte und symmetrische Ausbildung des Federelementes können im Gegensatz zum Ausführungsbeispiel gemäß Fig. 2 der doppelte Federweg, der sich aus der zweifachen Steghöhe H zusammensetzt, erzielt werden. Bei axialem Krafteintrag, jeweils über die Auflageflächen 51, 51' der Stützelemente 5, 5' werden die zugehörigen Federwirkflächen 3, 3' konvexseitig elastisch verformt und tragen somit zur Federwirkung des Federelementes bei. Zusätzlich vermögen die konisch geformten Oberflächen bezüglich der Körperbereiche 10, 10' durch elastische, axialwärts gerichtete Verformungen die Federwirkung zu unterstützen, ohne dabei die lineare Federkennlinie zu beeinträchtigen.

Neben einem axialwärts gerichteten Krafteintrag längs der Rotationsachse A auf das Federelement gemäß Ausführungsbeispiel in Figur 3 eignet sich dieses darüber hinaus auch zur Kraftaufnahme im Rahmen eines unsymmetrisch zur Rotationsachse A einwirkenden Krafteintrages bei gleich bleibender Federwirkung.

Das Federelement gemäß Figur 3 verfügt über eine Rotationssymmetrie um die Achse A sowie eine Spiegelsymmetrie um die Spiegelebene 11. Selbstverständlich sind die strengen Symmetrieforderungen nicht einschränkend zu verstehen hinsichtlich einer gewünschten Federwirkung. Ebenso denkbar sind Federelemente, deren obere Federhälfte 13 kleiner oder größer ausgebildet ist, als die Untere. Auch sind Ausführungsformen denkbar, die nicht über eine Rotationssymmetrie verfügen, bei denen bspw. die Federwirkflächen eine ovale oder n-eckige Umfangskontur aufweisen.

### Bezugszeichenliste

- 1: Federelement
- 2: Federkörper
- 3: Federwirkfläche
- 4: Durchgangsöffnung
- 5: Stützelement
- 51: Auflagefläche
- 6: Wirkfläche
- 7: Zentrieröffnung
- 8: Zentrierstift
- 9,10: Federabschnitt
- 11: Symmetrieebene
- 12,13: Obere und untere Hälfte des Federelementes
- O: Oberseite
- U: Unterseite
- UL: Unterlage
- H: Steghöhe
- F: Krafteintrag
- S: Verformungsweg

## Patentansprüche

1. Federelement bestehend aus einem Federkörper, der wenigstens eine elastisch verformbare Federwirkfläche aufweist, längs der wenigstens ein die Federwirkfläche überragendes Stützelement vorgesehen ist, das eine von der Federwirkfläche abgewandte Auflageebene definiert und die Federwirkfläche wenigstens abschnittsweise umgibt, sowie einen der Federwirkfläche gegenüberliegenden, durch den Federkörper getrennten Wirkbereich aufweist, der gleichgroß oder kleiner dimensioniert ist wie die Federwirkfläche und in einer senkrechten Projektion auf die Federwirkfläche, die Federwirkfläche zumindest teilweise überdeckt.

2. Federelement nach Anspruch 1,
**dadurch gekennzeichnet, dass** die Federwirkfläche eben ausgebildet ist.

3. Federelement nach Anspruch 1,
**dadurch gekennzeichnet, dass** die Federwirkfläche konkav gekrümmt ausgebildet ist.

4. Federelement nach einem der Ansprüche 1 bis 3,
**dadurch gekennzeichnet, dass** das wenigstens eine Stützelement in Art einer stegartigen Überhöhung ausgebildet ist, das die Federwirkfläche vollständig oder zumindest abschnittsweise umgibt.

5. Federelement nach Anspruch 4,
**dadurch gekennzeichnet, dass** die Federwirkfläche eine durch das wenigstens eine Stützelement vorgegebene Umfangskontur aufweist.

6. Federelement nach einem der Ansprüche 1 bis 5,
**dadurch gekennzeichnet, dass** die Federwirkfläche eine n-eckige, ovale oder runde Umfangskontur aufweist.

7. Federelement nach Anspruch 5,
**dadurch gekennzeichnet, dass** die Wirkfläche eine zur Federwirkfläche konforme Umfangskontur aufweist.

8. Federelement nach einem der Ansprüche 1 bis 6,
**dadurch gekennzeichnet, dass** die Wirkfläche kleiner als die Federwirkfläche ist und in senkrechter Projektion auf die Federwirkfläche zu dieser zentrisch angeordnet ist.

9. Federelement nach einem der Ansprüche 1 bis 8,
**dadurch gekennzeichnet, dass** die Wirkfläche ein gegenüber dem Federkörper erhabener Flächenbereich ist.

10. Federelement nach einem der Ansprüche 1 bis 9,
**dadurch gekennzeichnet, dass** der Federkörper samt dem wenigstens einen Stützelement, der Federwirkfläche und der Wirkfläche einstückig ausgebildet ist.

11. Federelement nach einem der Ansprüche 1 bis 10
**dadurch gekennzeichnet, dass** der Federkörper einen den Federkörper durchragenden Öffnungskanal aufweist, und
dass der Öffnungskanal die Wirk- und die Federwirkfläche vorzugsweise zentrisch durchsetzt.

12. Federelement nach einem der Ansprüche 1 bis 11,
**dadurch gekennzeichnet, dass** der Federkörper als Flachkörper ausgebildet ist und eine Ober- und Unterseite aufweist,
dass die Unterseite zumindest abschnittsweise an ihrem peripheren Randbereich das die Unterseite überragende Stützelement aufweist, das den übrigen Bereich der Unterseite als Federwirkfläche einbeschreibt,
dass an der Oberseite eine gegenüber der Oberseite erhabene Wirkfläche, die parallel zur Federwirkfläche orientiert ist, vorgesehen ist, und
dass die Wirkfläche in senkrechter Projektion zur Federwirkfläche zentrisch innerhalb der Federwirkfläche angeordnet ist.

13. Federelement nach einem der Ansprüche 1 bis 11,
**dadurch gekennzeichnet, dass** der Federkörper als Symmetriekörper bezogen zu einer die Wirk- und Federwirkfläche durchsetzenden Raumachse ausgebildet ist, dass der Federkörper im Bereich des wenigstens einen Stützelementes einen größten und im Bereich der Wirkfläche einen kleinsten jeweils die Raumachse senkrecht schneidenden Querschnitt aufweist, und
dass der Federkörper zwischen dem größten und dem kleinsten Querschnitt zumindest abschnittsweise einen sich im Querschnitt verjüngenden Federkörperabschnitt mit einer sich stetig verjüngenden Außenkontur aufweist.

14. Federelement nach Anspruch 13,
**dadurch gekennzeichnet, dass** der Federkörper zwei symmetrisch ausgebildete Federkörperhälften aufweist, die symmetrisch zu einer in der Wirkfläche liegenden Spiegelebene sind.

15. Federelement nach Anspruch 13,
**dadurch gekennzeichnet, dass** der Federkörper in zwei einstückig miteinander verbundene Körperabschnitte unterteilbar ist, von denen eine erster Körperabschnitt geradzylinderförmig ausgebildet ist, die Federwirkfläche sowie das die Federwirkfläche überragende Stützelement aufweist, und von denen ein zweiter Körperabschnitt sich axialwärts an den ersten anschließt und eine sich axialwärts stetig verjüngende Außenkontur aufweist.

16. Federelement nach Anspruch 15,
**dadurch gekennzeichnet, dass** die sich axialwärts stetig verjüngende Außenkontur konisch ausgebildet ist.

17. Federelement nach Anspruch 15,
**dadurch gekennzeichnet, dass** die sich axialwärts stetig verjüngende Außenkontur parabolisch gekrümmt ausgebildet ist.
